# EUROPEAN PATENT APPLICATION

(11) **EP 4 773 519 A1**
(43) Date of publication of application: **08.07.2026**
(21) Application number: 25223694.8
(22) Date of filing: 16.12.2025
(51) Int. Cl.: H04B 7/185

(54) **GROUND EQUIPMENT AND SATELLITE TRACKING METHOD USED THEREIN**

(30) Priority: 02.01.2025 TW 114100025
(71) Applicant: Alpha Networks Inc., 300094 Hsinchu (TW)
(72) Inventor: TSAI, Geng-Shin, 300094 Hsinchu (TW)
(74) Representative: Reichert & Lindner Partnerschaft Patentanwälte

(57) **Abstract**

A ground equipment (10) and a satellite tracking method used therein are provided. The satellite tracking method is employed by the ground equipment (10) to maintain communication with a satellite via a best communication beam. The method utilizes the signal strength received from the satellite through a plurality of candidate beams neighboring the best communication beam to determine whether to replace the best communication beam with one of these candidate beams (S400 - S404). This approach achieves efficient tracking by avoiding the need to scan all quasi-communication beams. Furthermore, when the ground equipment switches to an incoming satellite (a second satellite operating in the same orbit), the satellite tracking method determines the communication beam to be used to initiate communication with that incoming satellite. This determination is made based on the angular change of the ground equipment's orientation, where the angular change is measured between the point of initiating communication with the current (first) satellite and the moment of satellite replacement.

## Description

### FIELD OF THE INVENTION

The present invention relates to a ground equipment and a satellite tracking method used therein, and particularly to a ground equipment and a satellite tracking method used therein when switching communication satellites.

### BACKGROUND OF THE INVENTION

Since Low-Earth Orbit (LEO) satellites are in a state of high-speed movement relative to the ground equipment (Ground Station), the ground equipment usually utilizes the characteristic of the Phased Array Antenna to manipulate the direction of the radio beam to change the signal receiving direction nowadays. This enables an antenna in a stationary state to track the fast-moving LEO satellites. Because quick and accurate tracking of the orbiting satellite currently communicating with the antenna can improve the reliability of communication using this antenna, many technicians have focused their research on this area. However, the factor affecting antenna communication reliability is not limited to the above one factor.

Another factor affecting antenna communication reliability appears when the satellite currently communicating with the antenna is about to leave the antenna's coverage area, requiring the antenna to replace the current communication operation with the next satellite operating in the same orbit. If the antenna cannot establish a communication channel with the next satellite as quickly as possible in this situation, the communication carried out through this antenna may experience delay or even be interrupted. For an antenna in a stationary state, finding the next satellite operating in the same orbit may not be difficult, but for an antenna in a state of movement, a technology capable of quickly finding the satellite for continuous communication is a highly important issue.

### SUMMARY OF THE INVENTION

Accordingly, one objective of the present invention is to provide a ground equipment and satellite tracking method used therein. By this method, the next satellite operating in the same orbit as the current communicating satellite can be quickly located by the ground equipment, thereby achieving the effect of smooth continuity of the current communication.

In one aspect, the present invention provides a satellite tracking method for ground equipment. The satellite tracking method is adapted to be utilized in ground equipment communicating with a first satellite. The communication between the ground equipment and the first satellite is implemented through a best communication beam selected from a plurality of quasi-communication beams generated by a multi-array antenna. The centers of these quasi-communication beams are arranged regularly, and the coverage areas of any two adjacent quasi-communication beams partially overlap. The satellite tracking method is characterized by including: recording the best communication beam utilized when the ground equipment initially communicates with the first satellite (S200); recording an initial orientation angle value representing the direction faced by a reference object which is fixed relative to the multi-array antenna, on the horizontal plane when the ground equipment initially communicates with the first satellite (S202); selecting a plurality of candidate beams, wherein each candidate beam corresponds to a quasi-communication beam adjacent to the best communication beam (S400 - S402); determining, while disregarding the quasi-communication beams that are not candidate beams, whether the best communication beam is to be replaced by one of the candidate beams based on a first signal strength of the candidate beam measured when the candidate beam communicates with the first satellite (S404); when a determination is made that the best communication beam is to be replaced by one of the candidate beams, the candidate beam possessing the greatest first signal strength to replace the best communication beam (S510 - S514); when the ground equipment is prepared to replace the first satellite with a second satellite (S210), acquiring a switched orientation angle value representing the direction faced by the aforementioned reference object on the horizontal plane at that time (S220 - S230); and selecting one of the quasi-communication beams as the best communication beam to be used when the ground equipment initiates communication with the second satellite in accordance with the angular change between the initial orientation angle value and the switched orientation angle value and the best communication beam used when the ground equipment initiates communication with the first satellite (S240). Wherein, the aforementioned step of determining, while disregarding the quasi-communication beams that are not candidate beams, whether the best communication beam is to be replaced by one of the candidate beams based on the first signal strength of the candidate beam measured when the candidate beam communicates with the first satellite (S404), comprises performing a scanning operation for each of the candidate beams (S50). The scanning operation comprises: determining whether the first signal strength of the candidate beam undergoing the scanning operation, when communicating with the first satellite, is greater than a second signal strength of the best communication beam when communicating with the first satellite (S504); and when the first signal strength of the candidate beam undergoing the scanning operation is greater than the second signal strength, the candidate beam undergoing the scanning operation is listed as a potential replacement for the best communication beam (S506).

In one embodiment, the step of selecting the plurality of candidate beams comprises: selecting all communication beams adjacent to the best communication beam as the candidate beams, in response to communicating with the first satellite and without having replaced the best communication beam yet (S402); and setting the most recently replaced best communication beam as a previous communication beam and determining the candidate beams to be selected according to a positional relationship between the best communication beam and the previous communication beam, in response to communicating with the first satellite and having replaced the best communication beam (S602).

Furthermore, in one embodiment, the step of setting the most recently replaced best communication beam as the previous communication beam and determining the candidate beams to be selected according to the positional relationship between the best communication beam and the previous communication beam, in response to communicating with the first satellite and having replaced the best communication beam comprises: selecting a central beam, wherein a relative direction between the central beam and the best communication beam is equal to a relative direction between the best communication beam and the previous communication beam (S800, S802); selecting at least one offset beam, wherein each of the at least one offset beam is adjacent to the central beam, and each of the at least one offset beam is also adjacent to the best communication beam (S804); and using the selected central beam and the at least one offset beam as the candidate beams to be selected (S806).

In one embodiment, centers of three adjacent ones among the quasi-communication beams enclose an equilateral triangle.

In one embodiment, the satellite tracking method further comprises selecting a plurality of directions (S1000); assigning a corresponding and distinct first designation to each of the directions, thereby obtaining a plurality of the first designations (S1002); and performing a setting procedure for each of the quasi-communication beams (S1004). Wherein, the setting procedure comprises: setting the quasi-communication beam undergoing the setting procedure as a setting-in-progress beam, and assigning a second designation, which is distinct from those assigned to other quasi-communication beams, to the setting-in-progress beam; and labeling the quasi-communication beams adjacent to the setting-in-progress beam using the second designation and the first designations.

Furthermore, in one embodiment, the step of selecting the plurality of candidate beams comprises: selecting all communication beams labeled by the second designation corresponding to the best communication beam and any of the first designations as the candidate beams, in response to communicating with the first satellite and without having replaced the best communication beam yet; and setting the most recently replaced best communication beam as a previous communication beam and determining the candidate beams to be selected according to a positional relationship between the best communication beam and the previous communication beam, in response to communicating with the first satellite and having replaced the best communication beam.

Furthermore, in one embodiment, the step of setting the most recently replaced best communication beam as the previous communication beam and determining the candidate beams to be selected according to the positional relationship between the best communication beam and the previous communication beam, in response to communicating with the first satellite and having replaced the best communication beam, comprises: selecting a central beam, wherein when the best communication beam is labeled by the second designation corresponding to the previous communication beam and a direction designation among the first designations, the central beam is the quasi-communication beam labeled by the second designation corresponding to the best communication beam and the direction designation; selecting at least one offset beam, wherein each of the at least one offset beam is adjacent to the central beam, and each of the at least one offset beam is also adjacent to the best communication beam; and using the selected central beam and the at least one offset beam as the candidate beams to be selected.

Also, in one embodiment, the step of performing the scanning operation for each of the candidate beams further comprises: stopping the scanning operation for the candidate beams when the first signal strength of the candidate beam undergoing the scanning operation is greater than the second signal strength and reaches a preset threshold.

In one aspect of view, the present invention provides a satellite tracking method suitable for use in a ground equipment communicating with a first satellite and a second satellite, wherein the ground equipment communicates with the first satellite and the second satellite using a best communication beam among a plurality of quasi-communication beams generated by a multi-array antenna, the first satellite and the second satellite are on the same orbit, and the second satellite initiates communication with the ground equipment immediately after the first satellite. The satellite tracking method is characterized by comprising: recording the best communication beam used when the ground equipment initiates communication with the first satellite (S200), and recording an initial orientation angle value indicating a direction pointed by a reference object on a horizontal plane (S202), which is relatively fixed with respect to the multi-array antenna, at that time; obtaining a switched orientation angle value indicating a direction pointed by the reference object on the horizontal plane at that time when the ground equipment is prepared to replace the first satellite with the second satellite (S210 - S230); and selecting one of the quasi-communication beams as the best communication beam used when the ground equipment initiates communication with the second satellite, according to an angular change between the initial orientation angle value and the switched orientation angle value and the best communication beam used when the ground equipment initiates communication with the first satellite (S240).

In one aspect of view, the present invention provides a ground equipment (10), which is characterized by comprising a processor (100) for executing any one of the satellite tracking method as set forth above; an antenna signal converter (110) electrically coupled to the processor (100); an electronic compass (115) electrically coupled to the processor (100); and a multi-array antenna (130) electrically coupled to the antenna signal converter (110).

By employing the aforementioned technology, the ground equipment and the satellite tracking method provided by the present invention allow accurate identification of the beam suitable for satellite communication without scanning all quasi-communication beams. Moreover, the quantity of quasi-communication beams required for scanning is reduced through the utilization of prior satellite tracking results, thereby further improving the efficiency of satellite tracking. Furthermore, a beam suitable for communicating with the next satellite operating in the same orbit as the current communicating satellite is quickly located through monitoring of the rotation status of the ground equipment. Consequently, time cost for communication channel switching due to satellite switching can be reduced, thus achieving the effect of smooth continuity for the current communication.

### BRIEF DESCRIPTION OF THE DRAWINGS

The invention will become more readily apparent to those ordinarily skilled in the art after reviewing the following detailed description and accompanying drawings, in which:
FIG. 1 is a schematic diagram of the ground equipment according to an embodiment of the present invention;
FIG. 2 is a flowchart of the satellite tracking method according to an embodiment of the present invention;
FIG. 3 is a schematic diagram illustrating the relationship between the multi-array antenna and the quasi-communication beams according to an embodiment of the present invention;
FIG. 4 is a flowchart of the satellite tracking method according to another embodiment of the present invention;
FIG. 5 is a detailed flowchart of the satellite tracking method according to an embodiment of the present invention when implementing step S404;
FIG. 6 is a detailed flowchart of a satellite tracking method during the implementation of Step S404 according to another embodiment of the present invention
FIG. 7 is a detailed flowchart of the satellite tracking method according to an embodiment of the present invention when implementing step S604;
FIG. 8 is a detailed flowchart of the satellite tracking method according to an embodiment of the present invention when implementing step S602;
FIG. 9A is a detailed flowchart of the satellite tracking method according to an embodiment of the present invention;
FIG. 9B is a detailed flowchart of the satellite tracking method according to an embodiment of the present invention when implementing step S924;
FIG. 10 is a flowchart of the satellite tracking method according to an embodiment of the present invention when labeling the quasi-communication beams; and
FIG. 11 is a schematic diagram of the labeling result of the satellite tracking method according to an embodiment of the present invention when labeling the quasi-communication beams.

### DETAILED DESCRIPTION OF PREFERRED EMBODIMENTS

The invention will now be described in further detail with reference to the following embodiments. It should be noted that the description of the embodiments provided herein is for purposes of illustration and description only and is not intended to be exhaustive or to limit the invention to the precise forms disclosed.

It is also noted that, to facilitate understanding by those having ordinary skill in the art, "a first unit is electrically coupled to a second unit" means that electronic signals can be transmitted between the first unit and the second unit. Unless otherwise specified, such transmission of the electronic signals may be unidirectional or bidirectional, and the mode of transmission may be wired or wireless.

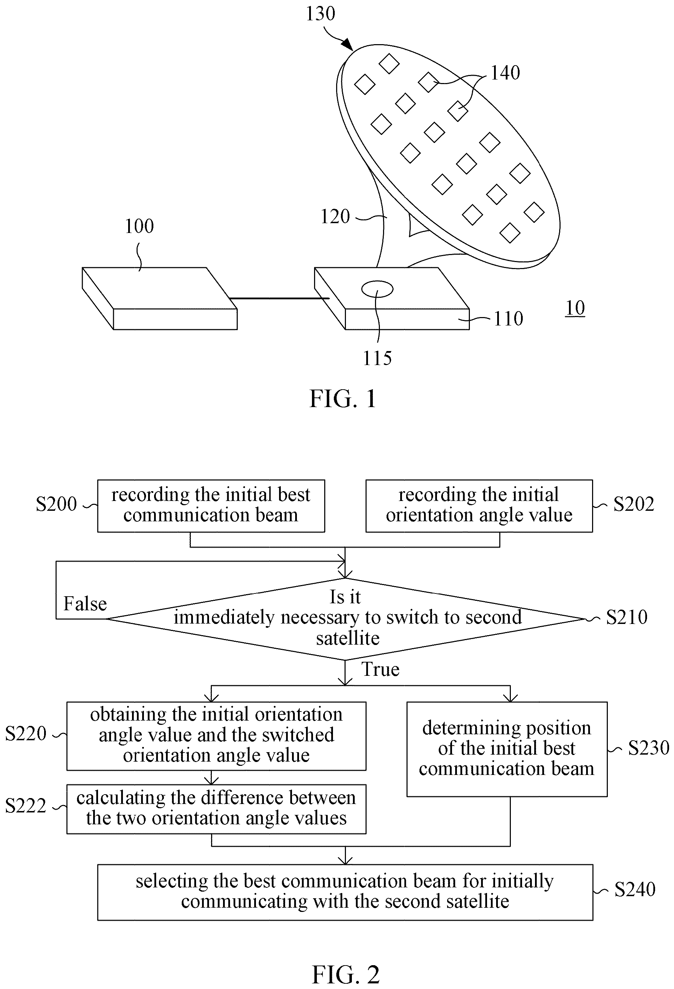

Please refer to FIG. 1, which is a schematic diagram of the ground equipment according to an embodiment of the present invention. In this embodiment, the ground equipment 10 comprises a processor 100, an antenna signal converter 110, an electronic compass 115, an antenna bracket 120, and a multi-array antenna 130. The processor 100 is electrically coupled to the antenna signal converter 110 so that electronic signals can be mutually transmitted between the processor 100 and the antenna signal converter 110. The electronic compass 115 is disposed on the antenna signal converter 110 for detecting orientation (e.g., North or South). The electronic compass 115 is electrically coupled to the processor 100 to transmit the results obtained from its orientation detection to the processor 100 for subsequent use. The antenna bracket 120 is constructed between the multi-array antenna 130 and the antenna signal converter 110 to fix the position of the multi-array antenna 130 and serve as a carrier for the lines connecting the multi-array antenna 130 to the antenna signal converter 110. The multi-array antenna 130 comprises a plurality of antenna arrays 140 for individually receiving radio waves. Furthermore, the multi-array antenna 130 is capable of converting the received radio waves into electronic signals. The electronic signals derived from the conversion by the multi-array antenna 130 are first transmitted to the antenna signal converter 110 via lines attached to the antenna bracket 120, and are then further transmitted to the processor 100 for processing and subsequent use.

In alternative embodiments, the aforementioned hardware architecture may be varied while still providing the same specific functionality. For example, the processor 100 may utilize a wireless connection to exchange electronic signals with the antenna signal converter 110, the antenna bracket 120 may not be integrated with the antenna signal converter 110, the multi-array antenna 130 may be configured to rotate about the antenna bracket 120 as a central axis, and the electronic compass 115 may also be disposed on the antenna bracket 120 or the multi-array antenna 130. Ground equipment having different hardware architectures but capable of achieving the same functionality as the described embodiment can all be utilized to execute the satellite tracking method to be subsequently explained. That is to say, the satellite tracking method provided by the present invention is not limited to the hardware architecture mentioned in the above embodiment, which should be known to those with ordinary skill in the art.

In order for signals transmitted from satellites to be received within the maximum possible range, the multi-array antenna 130 is generally designed to be capable of receiving radio waves from different directions. In this embodiment, a radio wave beam capable of receiving radio waves from a specific direction and possessing a certain beam width may be generated utilizing one or more antenna arrays 140. This type of radio wave beam shall be referred to as a quasi-communication beam in this specification. The range covered by the beam width of each quasi-communication beam is simplified and referred to as the coverage area of the quasi-communication beam. Furthermore, the quasi-communication beam currently being used for communication with the satellite is specifically referred to as the best communication beam. To facilitate clarity and ease of understanding, the following embodiments are illustrated with one antenna array corresponding to one quasi-communication beam. However, this technology is also applicable to scenarios where a single quasi-communication beam is formed by combining multiple antenna arrays.

Please refer to FIG. 1 and FIG. 2 concurrently, wherein FIG. 2 is a flowchart of the satellite tracking method according to an embodiment of the present invention. It should be noted that the processes described below may be written as software code and executed by the processor 100, thereby achieving the objective of controlling the multi-array antenna 130 to realize the intended functionalities.

In the embodiment illustrated by FIG. 2, the processor 100 records in Step S200 the best communication beam used when the ground equipment 10 initiates communication with a satellite (hereinafter referred to as the first satellite), which is hereinafter referred to as the initial best communication beam. Additionally, the processor 100 also records in Step S202 the angular value of the orientation of a specific reference object in the preset coordinate system (the coordinate system formed by the horizontal plane is used as an example hereafter) when the ground equipment 10 initiates communication with the first satellite, which is hereinafter referred to as the initial orientation angle value. The multi-array antenna 130 may utilize any means provided in existing technology to initially establish a communication link with the first satellite. The processor 100 is thereby enabled to ascertain the best communication beam required to be recorded in Step S200. On the other hand, the processor 100 may also calculate and obtain the initial orientation angle value required to be recorded in Step S202, at the time the multi-array antenna 130 initially establishes the communication link with the first satellite. This calculation is performed based on the angular reading obtained from the electronic compass 115 and the difference between the orientation of the electronic compass 115 and the orientation of the reference object.

It should be noted that, although the coordinate system formed by the horizontal plane is used as an example in the above and following embodiments, the technical means described in these embodiments may also be applied to other two-dimensional or three-dimensional coordinate systems. Therefore, the present invention is not limited to being utilized in a coordinate system of the horizontal plane.

In the operation described above, to confirm the orientation of the multi-array antenna 130, it is preferred that an object located at a fixed position relative to the multi-array antenna 130 is selected as the reference object mentioned above. For example, since the multi-array antenna 130 is fixed onto the antenna signal converter 110 using the antenna bracket 120 in the embodiment shown in FIG. 1, provided that the multi-array antenna 130 is not rotated, the multi-array antenna 130 itself, the antenna bracket 120, or the antenna signal converter 110 may be selected as the reference object; alternatively, when the electronic compass 115 is fixed onto the antenna signal converter 110, the electronic compass 115 may also be selected as the reference object; furthermore, when the antenna signal converter 110 is fixed onto a certain vehicle, the vehicle carrying the antenna signal converter 110 may also be selected as the reference object. Furthermore, the initial orientation angle value of the reference object's orientation on the horizontal plane may be calculated based on the result of the orientation detection by the electronic compass 115 plus the orientation angle difference between the reference object and the electronic compass 115, or the angular reading of the electronic compass 115 may be directly used as the initial orientation angle value of the reference object.

In another embodiment, when the multi-array antenna 130 is not fixed, such as when the multi-array antenna 130 is capable of rotating about the antenna bracket 120 as its axis, the aforementioned reference object can only be the multi-array antenna 130 itself. In this scenario, in order to simplify the process of obtaining the initial orientation angle value of the reference object, one may choose to directly install the electronic compass 115 onto the multi-array antenna 130 and directly use the angular reading of the electronic compass 115 as the initial orientation angle value of the reference object, which is the multi-array antenna 130 in this case.

Please refer back to FIG. 2. After the communication link is established between the ground equipment 10 and the first satellite, the ground equipment 10 may utilize any existing technology to adjust the best communication beam used during its communication with the first satellite. Since the satellite moves at high speed in orbit, the time during which the first satellite is within the coverage of the multi-array antenna 130 is also extremely limited. Therefore, after the communication between the ground equipment 10 and the first satellite has lasted for a period of time, it must be determined whether it is immediately necessary to utilize another satellite (hereinafter referred to as the second satellite) running in the same orbit as the first satellite to take over the communication link originally established via the first satellite (Step S210), in order to avoid the communication link being interrupted because the first satellite leaves the coverage of the multi-array antenna 130.

When the determination result of Step S210 is false, i.e., it is not yet necessary to use the second satellite to take over the communication link originally established via the first satellite, the processor 100 may repeat the determination operation of Step S210 after waiting for a period of time. Conversely, when the determination result of Step S210 is true, i.e., it is immediately necessary to use the second satellite to take over the communication link originally established via the first satellite, Step S220 is performed in this embodiment to obtain the previously stored initial orientation angle value and the angular value of the orientation of the reference object on the horizontal plane at this time (hereinafter referred to as the switched orientation angle value). Additionally, Step S230 is performed to obtain the previously stored initial best communication beam and thereby determines the position of the initial best communication beam on the multi-array antenna 130. After Step S220 is completed, the processor 100 performs Step S222 to further calculate the difference between the initial orientation angle value and the switched orientation angle value, and finally performs Step S240 to select a quasi-communication beam as the best communication beam to be used when the ground equipment 10 initially establishes communication with the second satellite using the multi-array antenna 130. This selection is performed according to the difference value obtained from Step S222 and the position of the initial best communication beam on the multi-array antenna 130 obtained from Step S230, following the method of coordinate conversion.

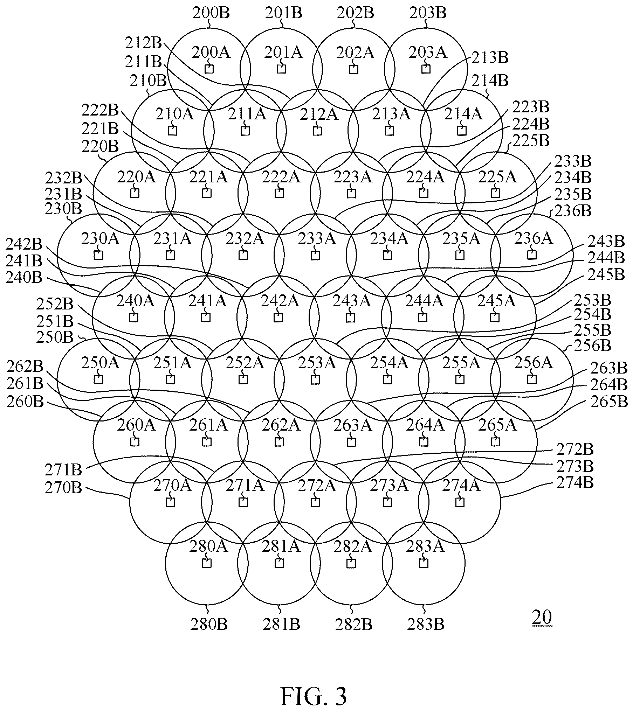

In order to enable those with ordinary skill in the art to more clearly understand the aforementioned technical content, the above steps will be further described below with reference to FIG. 3. FIG. 3 is a schematic diagram showing the relationship between the multi-array antenna and the quasi-communication beams according to an embodiment of the present invention. In this embodiment, the multi-array antenna 20 includes a plurality of antenna arrays 200A to 203A, 210A to 214A, 220A to 225A, 230A to 236A, 240A to 245A, 250A to 256A, 260A to 265A, 270A to 274A, and 280A to 283A. Each antenna array can generate a corresponding quasi-communication beam; that is, the multi-array antenna 20 can generate a plurality of quasi-communication beams 200B to 203B, 210B to 214B, 220B to 225B, 230B to 236B, 240B to 245B, 250B to 256B, 260B to 265B, 270B to 274B, and 280B to 283B. In order to enable uninterrupted communication with satellites located within the communication range of the multi-array antenna 20, the coverage areas of two adjacent quasi-communication beams are designed to be partially overlapping in this embodiment.

It should be noted here that two quasi-communication beams referred to as being adjacent in the context of this specification means that the two antenna arrays that generate these two quasi-communication beams are adjacent. Two antenna arrays are defined as adjacent if the line connecting the centers of the two antenna arrays passes through locations that are all within the coverage of at least one of the two quasi-communication beams generated by these two antenna arrays. For example, in the embodiment shown in FIG. 2, because the entire line connecting the centers of the antenna arrays 251A and 241A is contained within the coverage of the quasi-communication beam 251B or 241B, the antenna arrays 251A and 241A are two adjacent antenna arrays, and the quasi-communication beams 251B and 241B are therefore two adjacent quasi-communication beams. Conversely, because the line connecting the centers of the antenna arrays 251A and 242A passes through portions that are not within the coverage of the quasi-communication beam 251B or 242B (e.g., only within the coverage of the quasi-communication beam 241B or 252B), the antenna arrays 251A and 242A are not adjacent. Furthermore, in this embodiment, the centers of three mutually adjacent quasi-communication beams form an equilateral triangle. For instance, in this embodiment, the antenna arrays 240A, 241A and 251A are adjacent to each other, and the centers of the antenna arrays 240A, 241A, and 251A form an equilateral triangle. It should be noted that whether the centers of three mutually adjacent quasi-communication beams form an equilateral triangle does not affect the normal operation of the technology of the present invention. The arrangement of the antenna arrays on the multi-array antenna 20 can be changed according to actual needs. For example, the arrangement of the antenna arrays on the multi-array antenna 20 can be adjusted into different shapes, such as circular, square, or arbitrary polygonal shapes, based on parameters like the transmission characteristics, strength, or frequency of the quasi-communication beams or characteristics like the shape, size, or reception power of the multi-array antenna 20, thereby allowing the area enclosed by three mutually adjacent quasi-communication beams to present a shape other than an equilateral triangle.

In one embodiment, it is assumed that the center position of the multi-array antenna 20 is designed at the center point of the antenna array 233A, and the orientation angle of the multi-array antenna 20 is defined as 0° for due north, 90° for due east, 180° for due south, and 270° for due west. Also, it is assumed that the initial best communication beam recorded in Step S200 of FIG. 2 is the quasi-communication beam 272B, which is slightly below the center of FIG. 3, and the initial orientation angle value recorded in Step S202 is 0° (i.e., due north). Additionally, assume that the switched orientation angle value obtained in Step S220 of FIG. 2 is 330°. In this situation, it is obvious that no matter how the multi-array antenna 20 rotates during the period from the start of communication with the first satellite until the necessity of switching to communication with the second satellite, based solely on the initial and final orientation angles, the multi-array antenna 20 transitioned from an orientation facing due north to an orientation facing 30° west of north. Therefore, when calculated in a clockwise manner, the difference value calculated in Step S222 will be 0°-330°=-330°. This indicates that the best communication beam prepared to be used for establishing initial communication with the second satellite in the multi-array antenna 20 will be the quasi-communication beam 270B, which is generated by antenna array 270A, and is both the antenna reached by rotating antenna array 272A counter-clockwise by 330° around the center of antenna array 233A and located at a distance from antenna array 233A approximately equal to the distance between antenna array 272A and antenna array 233A.

It is obvious that the aforementioned orientation angles can also be defined in other ways. For instance, the definition can adopt a counter-clockwise manner with due east defined as 0°. That is, the orientation angle of the multi-array antenna 20 is 0° when facing due east, 90° when facing due north, 180° when facing due west, and 270° when facing due south. Thus, in the previous embodiment, the initial orientation angle value of the multi-array antenna 20 would be 90°, and the switched orientation angle value would be 120°. At this time, the difference value calculated in Step S222 would be 90°-120°=-30°, which indicates that the multi-array antenna 20 has been rotated counter-clockwise by 30° on the horizontal plane. Therefore, the best communication beam prepared to be used for establishing initial communication with the second satellite in the multi-array antenna 20 will be the quasi-communication beam 270B, which is generated by antenna array 270A. Antenna array 270A is the antenna reached by rotating antenna array 272A clockwise by 30° around the center of antenna array 233A and is located such that its distance from antenna array 233A is approximately equal to the distance between antenna array 272A and antenna array 233A.

It can be observed from the foregoing embodiments that when the multi-array antenna 20 rotates by a specific angle value toward a certain direction, the resulting best communication beam prepared for initializing communication with the second satellite will be rotated by the same specific angle value in the opposite direction.

By utilizing the technology provided in the foregoing embodiments, the satellite tracking method proposed by the present invention can identify the best communication beam suitable for initially establishing a communication link with the second satellite without the need to scan every quasi-communication beam individually. Therefore, the time required to establish communication with the second satellite is reduced and thereby the risk of communication interruption is lowered.

In addition to the aforementioned technology, the satellite tracking method proposed by the present invention can also adjust the best communication beam used for communication with the first satellite or the second satellite without individually scanning all quasi-communication beams.

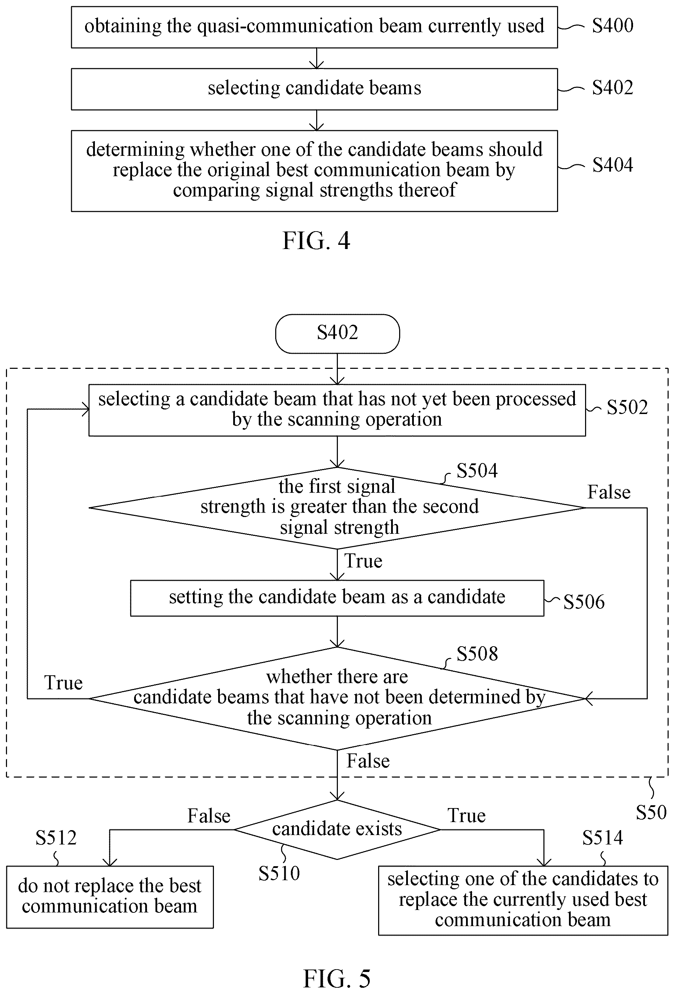

Please refer collectively to FIG. 1, FIG. 3, and FIG. 4, wherein FIG. 4 is a flowchart of a satellite tracking method according to another embodiment of the present invention. In this embodiment, after the processor 100 establishes a communication link between the ground equipment 10 and the first satellite, it can start by obtaining the quasi-communication beam currently used for communication with the first satellite through Step S400, which is also referred to as the best communication beam as described above. Subsequently, in Step S402, all quasi-communication beams neighboring (i.e., adjacent to) this best communication beam are selected based on the location of the best communication beam to serve as candidate beams. It can be understood that, depending on different actual needs, other quasi-communication beams that are not adjacent to the best communication beam may also be additionally selected as candidate beams here, and this variation does not affect the normal operation of the technology provided in this embodiment. Taking the embodiment shown in FIG. 3 as an example, assuming the best communication beam is the quasi-communication beam 261B, then the neighboring quasi-communication beams 260B, 251B, 252B, 262B, 271B, and 270B will all be set as candidate beams according to Step S402.

After the candidate beams have been selected, the signal strength of the signal received from the first satellite during communication by the best communication beam will be compared with the signal strength of the signals received from the first satellite by the candidate beams. The result of the comparison of the signal strengths of these candidate beams and the best communication beam will be used as the basis for determining whether one of the candidate beams should replace the original best communication beam to become the new best communication beam (Step S404). It is worth mentioning that, during the execution of Step S404, the signal strengths of the quasi-communication beams that have not been included as candidate beams and are not the best communication beam will not be considered in the decision to replace the best communication beam. Accordingly, the process of determining whether to replace the best communication beam does not require scanning all quasi-communication beams to obtain their corresponding signal strengths. Therefore, compared to current technology which requires scanning all quasi-communication beams one by one, the technology provided by the present invention can obviously reduce considerable workload.

More specifically, please refer to FIG. 5, which is a detailed flowchart of the satellite tracking method according to an embodiment of the present invention when implementing Step S404. In this embodiment, after the candidate beams are selected through Step S402, these candidate beams will be subjected to the determination of a scanning operation in Step S50 one by one to first confirm the magnitude relationship between the signal strength of the candidate beam (hereinafter also referred to as the first signal strength) and the signal strength of the best communication beam (hereinafter also referred to as the second signal strength). To realize the scanning operation, in Step S502, the embodiment first randomly selects a candidate beam that has not yet been processed by the scanning operation S50. Subsequently, it is determined whether the first signal strength of the selected candidate beam during communication with the first satellite is greater than the second signal strength of the best communication beam during communication with the first satellite (Step S504). When the first signal strength of the selected candidate beam is not greater than the second signal strength of the best communication beam, the flow proceeds to Step S508 to confirm whether there are still candidate beams that have not been determined by the scanning operation. Conversely, when the first signal strength of the selected candidate beam is greater than the second signal strength of the best communication beam, the currently selected candidate beam is set as one of the candidates that can be used to replace the best communication beam (Step S506). In some embodiments, every candidate that may be used to replace the best communication beam is gathered in a collection (hereinafter referred to as a replacement beam group). This subsequently allows the processor 100 or a user to easily select the candidate beam to finally replace the best communication beam according to predetermined rules.

After Step S506 is completed, this embodiment will further confirm whether there are still candidate beams that have not been determined by the scanning operation in Step S508. If there are still candidate beams that have not been determined by the scanning operation, the process returns to Step S502 to select another candidate beam that has not yet been determined by the scanning operation. Conversely, if all candidate beams have been determined by the scanning operation, the process proceeds to Step S510 to confirm whether any candidate that could be used to replace the best communication beam was found after the completion of the scanning on all candidate beams. When the determination result of Step S510 is false, meaning that no first signal strength was found to be greater than the second signal strength during this scanning operation (Step S50), the final result of this scanning operation (Step S50) is not to replace the best communication beam (Step S512). Conversely, when the determination result of Step S510 is true, meaning that at least one candidate whose signal strength is greater than the second signal strength was found, the process proceeds to Step S514 to select one of the candidates to replace the currently used best communication beam and, as a result, become the new best communication beam.

In this embodiment, when selecting the candidate in Step S514, the candidate beam having the largest signal strength is selected to replace the currently used best communication beam. However, those with ordinary skill in the art may also select other candidates in this step based on their needs, and this does not affect the normal operation of the technology provided by the present invention.

It should be noted here that, in order for Step S502 to operate normally, before entering S502 from Step S402 each time, all candidate beams should first be set to the state of having not yet been determined by the scanning operation. Additionally, throughout the entire scanning operation S50, every candidate beam selected in Step S502 should be set to the state of having been determined by the scanning operation at an appropriate time point. Considering that it is necessary to confirm whether there are still beams that have not been determined by the scanning operation in Step S508, the aforementioned appropriate time point can be, for example, after Step S502, after Step S504, or after Step S506. Specifically, the time points for setting the candidate beam to the state of having been determined by the scanning operation can be, for example, between the transition from Step S502 to Step S504, or between the transition from Step S504 to Step S508 and the transition from Step S504 to Step S506. Alternatively, the time points can be between the transition from Step S504 to Step S508 and the transition from Step S506 to Step S508. It could be understood that, the aforementioned appropriate time points can also fall within the operation process of Step S502 or S504. Those skilled in the art can adjust them arbitrarily based on the spirit of the aforementioned technical content.

Through the embodiment illustrated in FIG. 5, the technology provided by the present invention can determine whether to replace the best communication beam with one of the quasi-communication beams after only scanning the signal strengths of the quasi-communication beams neighboring the best communication beam. This significantly reduces the workload required for judging whether to switch different quasi-communication beams for communication with a specific satellite, thereby speeding up the confirmation of whether to replace the best communication beam. Furthermore, technicians may utilize the aforementioned technology to decide whether to replace the best communication beam throughout the entire process of communicating with a specific satellite.

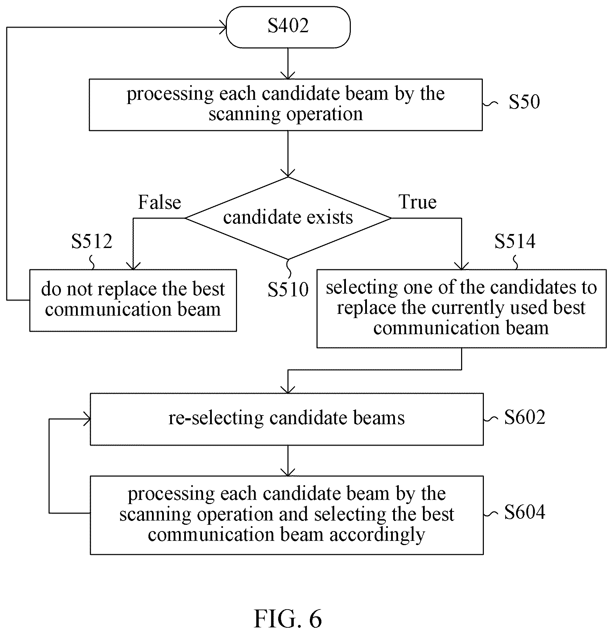

In addition to the techniques described above, the present invention further provides a technique that can further accelerate the speed of confirming whether to replace the best communication beam. Please refer to FIG. 6, which is a detailed flowchart of a satellite tracking method during the implementation of Step S404 according to another embodiment of the present invention. The specific implementation of Step S50 and Steps S510 to S514 has been described in detail above and thus will not be repeated here. In this embodiment, after Step S514 is completed, the process proceeds to Step S602 to select new candidate beams based on the relative positional relationship between the best communication beam being replaced most recently and the best communication beam used currently. After the new candidate beams are selected, these candidate beams will be processed by the aforementioned scanning operation to determine whether to replace the best communication beam (Step S604).

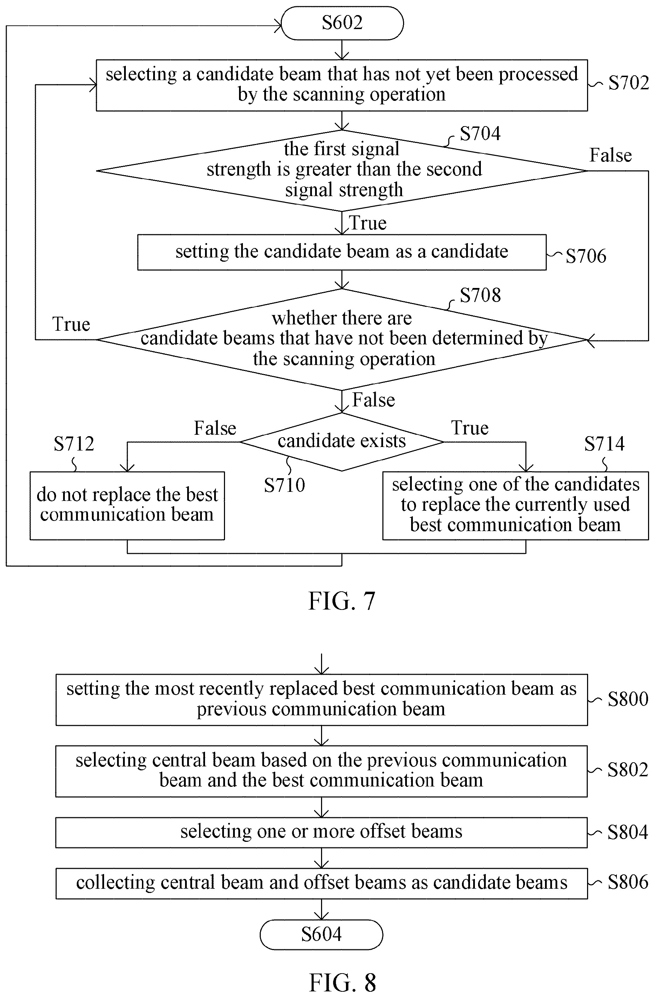

Please refer to FIG. 7, which is a detailed flowchart of the satellite tracking method according to an embodiment of the present invention during the implementation of Step S604. The embodiment shown in FIG. 7 is similar to that shown in FIG. 5. The detailed implementation process of Steps S702 to S714 can be referenced in the description of Steps S502 to S514 in FIG. 5 and are not be repeated here. The difference from the embodiment shown in FIG. 5 is that after Step S712 or Step S714 is completed, the process returns to Step S702 to re-select candidate beams to prepare for the next determination of whether to replace the best communication beam.

In order to further reduce the workload, Step S602 selects new candidate beams based on the relative positional relationship between the best communication beam being replaced most recently and the best communication beam used currently, instead of using all quasi-communication beams adjacent to the best communication beam as the new candidate beams. Please refer to FIG. 8, which is a detailed flowchart of the satellite tracking method during the implementation of Step S602 according to an embodiment of the present invention. In this embodiment, the most recently replaced best communication beam is first set as a previous communication beam (Step S800). Subsequently, a central beam is selected based on the positional relationship between the previous communication beam and the best communication beam (Step S802). In this embodiment, the central beam is selected to satisfy the following relationship: the relative direction between the central beam and the best communication beam is equivalent to the relative direction between the best communication beam and the previous communication beam. Taking the embodiment shown in Figure 3 as an example, assuming the previous communication beam is the quasi-communication beam 261B and the best communication beam is the quasi-communication beam 262B-meaning the best communication beam has moved relatively to the right side of the previous communication beam-then the selected central beam must also move relatively to the right side of the best communication beam; thus, the selected central beam should be the quasi-communication beam 263B, which is located to the right side of the best communication beam, i.e., the quasi-communication beam 262B.

After selecting the appropriate central beam via Step S802, the process proceeds to Step S804 to select one or more offset beams based on the central beam and the best communication beam. In this embodiment, the method for selecting the offset beam must satisfy the following relationship: the coverage area of each offset beam partially overlaps with the coverage area of the central beam and partially overlaps with the coverage area of the best communication beam. In other words, the offset beam is adjacent to both the central beam and the best communication beam. Continuing with the example cited in Step S802, in the situation where the best communication beam is the quasi-communication beam 262B and the central beam is the quasi-communication beam 263B, the quasi-communication beam 253B and the quasi-communication beam 272B will be selected as the offset beams.

Finally, after the central beam and the offset beams are selected via the above steps, the selected central beam and offset beams will be collectively set as the new candidate beams in Step S806. These candidate beams will then be processed by the subsequent Step S604, as described in the previous embodiments.

Since the number of candidate beams selected through Steps S800 to S806 is usually less than the number of all quasi-communication beams adjacent to the best communication beam, when determining whether to replace the best communication beam, the total number of operations required for making the determination using the candidate beams selected by Steps S800 to S806 can, in most cases, be less than the total number of operations required for making the determination by directly using all quasi-communication beams adjacent to the best communication beam. Therefore, it is comparatively more time and effort saving.

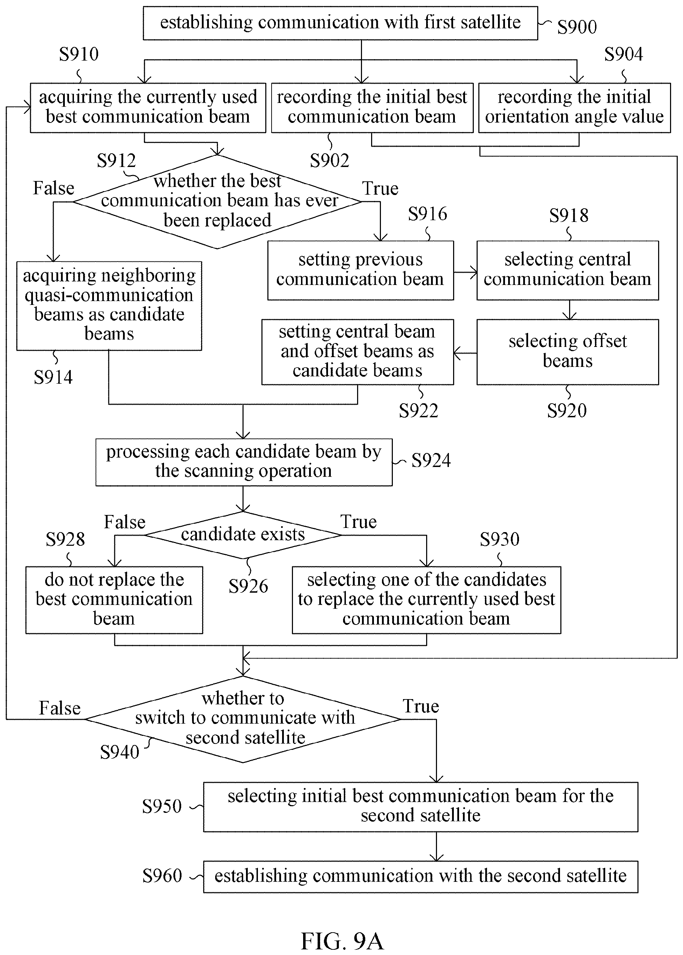

The above flow is merely for illustrating the technical spirit provided by the present invention. Those skilled in the art can modify the above flow according to the foregoing content, provided that the present invention can be accomplished by determining whether to replace the best communication beam using the quasi-communication beams adjacent to the best communication beam. For example, the aforementioned Figures 2, 4 to 8 can be integrated and adjusted into the embodiment shown in FIG. 9A.

Please refer to Figure 9A, which is a detailed flowchart of the satellite tracking method according to an embodiment of the present invention. In this embodiment, first, any existing technical means are used in Step S900 to enable the ground equipment to establish communication with the first satellite. Subsequently, the initial best communication beam used when the communication was initially established with the first satellite, and the initial orientation angle value of the multi-array antenna, are recorded in Steps S902 and S904, respectively. In addition, after establishing the communication with the first satellite via Step S900, the satellite tracking method provided by this embodiment will also acquire the currently used best communication beam in Step S910 and then determine whether the best communication beam has ever been replaced in Step S912 (i.e., whether the currently used best communication beam is no longer the initial best communication beam). When the determination in Step S912 indicates that the best communication beam has not been replaced, the process proceeds to Step S914 to acquire all quasi-communication beams adjacent to the best communication beam as candidate beams, and then proceeds to Step S924 to prepare for subsequent operations. Conversely, when the determination in Step S912 indicates that the best communication beam has been replaced, the process proceeds to Steps S916 to S922 to set the previous communication beam, select the central beam and offset beams, respectively, and use the central beam and offset beams as the candidate beams. Steps S916 to S922 are similar to the aforementioned Steps S800 to S806, and reference could be made to the content related to FIG. 8 for detailed descriptions, which are not repeated here.

After the candidate beams are obtained via Step S914 or Step S922, the process proceeds to Step S924 to use the aforementioned scanning operation to determine, for each candidate beam, the magnitude relationship between the first signal strength and the second signal strength. The detailed operations of Steps S924 to S930 can be referenced in the relevant descriptions of S50 to S514 in FIG. 5 or the relevant descriptions of S702 to S714 in FIG. 7, and are not repeated here.

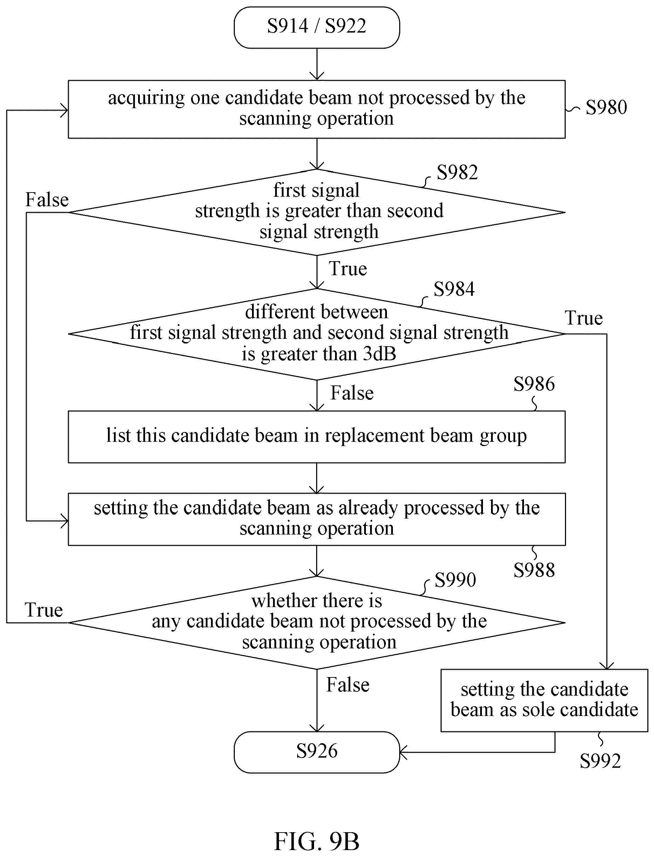

It is worth noting that the detailed operation of Step S924 is not limited to only using the procedure composed of Steps S502 to S508 as shown in FIG. 5. For example, please refer to FIG. 9B, which is a detailed flowchart of the satellite tracking method according to an embodiment of the present invention during the implementation of Step S924. In this embodiment, the satellite tracking method first acquires a candidate beam that has not yet undergone the scanning operation in Step S980. Subsequently, Step S982 determines whether the first signal strength at this time is greater than the second signal strength. When the first signal strength is not greater than the second signal strength, the process proceeds directly to Step S988 to set the currently selected candidate beam as having already undergone the scanning operation. Next, the process proceeds to Step S990 to confirm whether there are any candidate beams that have not yet undergone the scanning operation. If there are still candidate beams that have not been subjected to the scanning operation, the process returns to Step S980 to process another candidate beam. Conversely, after confirming that all candidate beams have undergone the scanning operation, the process proceeds to Step S926 for subsequent operations.

On the other hand, when it is determined that the first signal strength is greater than the second signal strength in Step S982, the process proceeds to Step S984 to further determine whether the difference between the first signal strength and the second signal strength is greater than a preset threshold (which is 3 dB in this embodiment). When the difference between the first signal strength and the second signal strength has not yet reached the preset threshold, the process proceeds to Step S986 to list this candidate beam in the aforementioned replacement beam group to become a member thereof, and then proceeds to Step S988 and Step S990 to perform corresponding operations. Conversely, when the difference between the first signal strength and the second signal strength is determined to reach the preset threshold in Step S984, the process proceeds to Step S992. In Step S992, the currently selected candidate beam (**candi datebeam**) is set as the sole candidate, that is, even if other candidate beams already exist in the replacement beam group, the replacement beam group is first cleared and then the currently selected candidate beam is stored therein to become the only member within the replacement beam group. After Step S992 is executed, the process proceeds to Step S926 for subsequent operations.

Please refer to FIG. 9A again, after the best communication beam is determined via Steps S924 to S930, the ground equipment (or the multi-array antenna) can, on one hand, continue communicating with the first satellite using this best communication beam, and on the other hand, determine whether it is time to switch to communicate with a second satellite that is in the same orbit as the first satellite (Step S940). When the determination result of Step S940 is false, the process returns to Step S910 and repeats the aforementioned various operations. Conversely, when the determination result of Step S940 is true, the process proceeds to Step S950. In Step S950, the appropriate best communication beam for initially establishing communication with the second satellite is selected by executing a procedure similar to Steps S220 to S240 shown in FIG. 2. After selecting the appropriate best communication beam for initially establishing communication with the second satellite, the process proceeds to Step S960 to start attempting to establish communication with the Second Satellite.

Comprehensively speaking, in situations corresponding to communicating with the same satellite and where the best communication beam has not been replaced, the embodiment shown in FIG. 9A selects all the quasi-communication beams adjacent to the best communication beam as the candidate beams. Conversely, in situations corresponding to communicating with this satellite and the best communication beam has ever been replaced, the embodiment shown in FIG. 9A sets the most recently replaced best communication beam as the previous communication beam, and then determines the candidate beams to be selected based on the positional relationship between the best communication beam and the previous communication beam. Thus, it can be seen that the embodiment shown in FIG. 9A can utilize different candidate beam selection mechanisms depending on the specific situation, thereby minimizing the quantity of candidate beams.

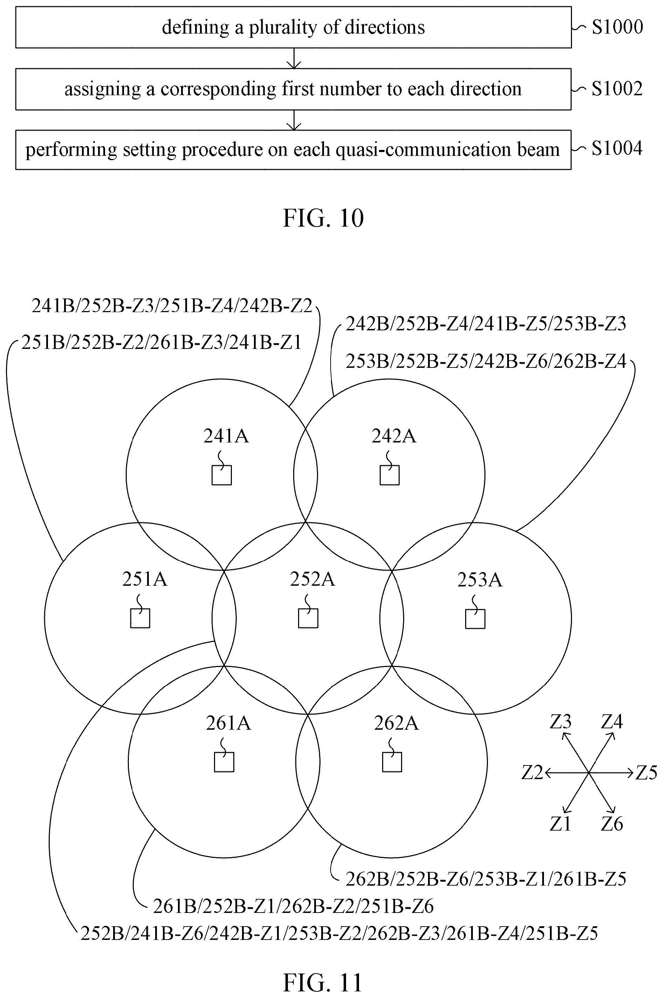

Furthermore, the present invention further proposes using symbolic notation to simplify the process of searching for the central beam and offset beams. Please refer to both FIG. 10 and FIG. 11, wherein FIG. 10 is a flowchart of the satellite tracking method according to an embodiment of the present invention when labeling the quasi-communication beams, and FIG. 11 is a schematic diagram of the labeling results of the satellite tracking method when labeling the quasi-communication beams according to an embodiment of the present invention. In this embodiment, the satellite tracking method divides the entire figure into multiple directions. Each direction represents a possible direction in which the other quasi-communication beams adjacent to a specific quasi-communication beam are located (Step S1000). Then, a corresponding first number is assigned to each direction (Step S1002). Taking the arrangement of the quasi-communication beams shown in FIG. 3 as an example, in this embodiment, the direction towards the lower left of the figure is numbered as Direction Z1, the direction towards the left side is numbered as Direction Z2, the direction towards the upper left is numbered as Direction Z3, the direction towards the upper right is numbered as Direction Z4, the direction towards the right side is numbered as Direction Z5, and the direction towards the lower right is numbered as Direction Z6.

After setting the First Number corresponding to each direction, a setting procedure is executed for each quasi-communication beam to assign a specific number based on the adjacent quasi-communication beams and the relative direction between them (Step S1004). Taking the quasi-communication beam 252B in FIG. 3 as the object of the setting procedure, i.e., using the quasi-communication beam 252B as the center, the final labeling result can be set to be represented by the label "252B" of the quasi-communication beam 252B and the direction numbers Z1 to Z6 for each direction. As shown in FIG. 11, the quasi-communication beam 261B located at the lower left of and adjacent to the quasi-communication beam 252B can be labeled as 252B-Z1, thereby indicating that the quasi-communication beam 261B is the adjacent beam in Direction Z1 relative to quasi-communication beam 252B. Similarly, the adjacent quasi-communication beam 251B located on the left side of the quasi-communication beam 252B can be labeled as 252B-Z2, thereby indicating that the quasi-communication beam 251B is the adjacent beam in Direction Z2 relative to the quasi-communication beam 252B. The adjacent quasi-communication beam 241B located at the upper left of the quasi-communication beam 252B can be labeled as 252B-Z3, thereby indicating that the quasi-communication beam 241B is the adjacent beam in Direction Z3 relative to the quasi-communication beam 252B. The adjacent quasi-communication beam242B located at the upper right of the quasi-communication beam 252B can be labeled as 252B-Z4, thereby indicating that the quasi-communication beam 242B is the adjacent beam in Direction Z4 relative to the quasi-communication beam 252B. The adjacent quasi-communication beam 253B located on the right side of the quasi-communication beam 252B can be labeled as 252B-Z5, thereby indicating that the quasi-communication beam 253B is the adjacent beam in Direction Z5 relative to the quasi-communication beam 252B. The adjacent quasi-communication beam 262B located at the lower right of the quasi-communication beam 252B can be labeled as 252B-Z6, thereby indicating that the quasi-communication beam 262B is the adjacent beam in Direction Z6 relative to the quasi-communication beam 252B.

From another perspective, since the quasi-communication beam 252B is located at the lower right of the quasi-communication beam 241B, when the setting procedure is executed and using the quasi-communication beam 241B as the center, the quasi-communication beam 252B can be labeled as 241B-Z6. Similarly, since the quasi-communication beam 252B is located at the lower left of the quasi-communication beam 242B, when the setting procedure is executed and using the quasi-communication beam 242B as the center, the quasi-communication beam 252B can be labeled as 242B-Z1. Since the quasi-communication beam 252B is located to the left of the quasi-communication beam 253B, when the setting procedure is executed and using the quasi-communication beam 253B as the center, the quasi-communication beam 252B can be labeled as 253B-Z2. Since the quasi-communication beam 252B is located at the upper left of the quasi-communication beam 262B, when the setting procedure is executed and using the quasi-communication beam 262B as the center, the quasi-communication beam 252B can be labeled as 262B-Z3. Since the quasi-communication beam 252B is located at the upper right of the quasi-communication beam 261B, when the setting procedure is executed and using the quasi-communication beam 261B as the center, the quasi-communication beam 252B can be labeled as 261B-Z4. Since the quasi-communication beam 252B is located to the right of the quasi-communication beam 251B, when the setting procedure is executed and using the quasi-communication beam 251B as the center, the quasi-communication beam 252B can be labeled as 251B-Z5.

From the above, it can be seen that after the aforementioned labeling is performed on each quasi-communication beam, each quasi-communication beam will have several different labels. These labels will be stored in a location accessible by the processor 100. Furthermore, when the processor 100 uses different labels corresponding to the same quasi-communication beam, the processor 100 can determine from the stored data that these labels refer to the same quasi-communication beam generated by the same antenna array.

Taking only the elements shown in FIG. 11 as an example, the quasi-communication beam 252B can also be labeled as 241B-Z6, 242B-Z1, 253B-Z2, 262B-Z3, 261B-Z4, and 251B-Z5. The quasi-communication beam 241B can also be labeled as 252B-Z3, 251B-Z4, and 242B-Z2. The quasi-communication beam 242B can also be labeled as 252B-Z4, 241B-Z5, and 253B-Z3. The quasi-communication beam 253B can also be labeled as 252B-Z5, 242B-Z6, and 262B-Z4. The quasi-communication beam 262B can also be labeled as 252B-Z6, 253B-Z1, and 261B-Z5. The quasi-communication beam 261B can also be labeled as 252B-Z1, 262B-Z2, and 251B-Z6. The quasi-communication beam 251B can also be labeled as 252B-Z2, 261B-Z3, and 241B-Z1.

The aforementioned setting procedure, which assigns different labels to the same quasi-communication beam, can be combined with the embodiments shown in FIG. 2 through FIG. 9A and FIG. 9B, thereby simplifying the steps of searching for the candidate beam, the central beam, and the offset beam. In order for these techniques to operate together normally, the process shown in FIG. 10 can be added before the steps in the embodiments shown in FIG. 2, FIG. 4 through FIG. 8, FIG. 9A, and FIG. 9B that involve obtaining a specific quasi-communication beam. Generally, the process shown in FIG. 10 may be performed when the processor 100 first connects to the multi-array antenna 130. The various numbers/labels set by the setting procedure in FIG. 10 can be stored on a storage device accessible by the processor 100 for retrieval during subsequent operations.

For example, after each quasi-communication beam has been labeled using the aforementioned setting procedure, when the best communication beam is the quasi-communication beam 252B and it is necessary to find all adjacent quasi-communication beams to serve as candidate beams, the processor 100 (via the satellite tracking method) can, by means of the labeling rules, set the quasi-communication beams corresponding respectively to the quasi-communication beam 252B-Z1, 252B-Z2, 252B-Z3, 252B-Z4, 252B-Z5, and 252B-Z6, which are 261B, 251B, 241B, 242B, 253B, and 262B, as candidate beams. Similarly, assuming the best communication beam was replaced from the quasi-communication beam 261B to the quasi-communication beam 252B. Since 252B is located to the upper right of 261B, and according to the previous direction classification (Direction Z4 is the upper right direction), the position of 252B is known to be reached by moving from 261B towards Direction Z4. Therefore, according to the aforementioned numbering, the best communication beam should correspondingly move from the quasi-communication beam 261B towards Direction Z4 and is relabeled as 261B-Z4. Consequently, the quasi-communication beam 252B-Z4 obtained by moving from the quasi-communication beam 252B towards Direction Z4, which is the quasi-communication beam 242B, can be selected as the central beam.

Furthermore, based on the first numbers corresponding to the previously set six directions, the quasi-communication beams 252B-Z3 and 252B-Z5 (i.e., the quasi-communication beams 241B and 253B), which are obtained by moving from the quasi-communication beam 252B to two sides of Direction Z4, can be selected as the offset beams. Herein, Direction Z3 is determined by jumping one step counterclockwise from Direction Z4 based on the six directions set previously, and Direction Z5 is determined by jumping one step clockwise from Direction Z4 based on the previously set six directions.

In summary, the satellite tracking method for ground equipment provided by the present invention is able to accurately find the suitable beam for communication with the satellite without scanning all quasi-communication beams. Furthermore, it can utilize the results of previous satellite tracking to reduce the number of quasi-communication beams that need to be scanned, thereby further improving the efficiency of satellite tracking. Moreover, the present invention is able to quickly find the beam suitable for communicating with the next satellite operating in the same orbit as the currently communicated satellite by monitoring the rotation amount of the ground equipment. Therefore, the present invention can reduce the communication channel switching time generated when switching satellites, and thus achieve the effect of good continuity of the current communication.

## Claims

1. A satellite tracking method for ground equipment, adapted to be used in a ground equipment that communicates with a first satellite through a best communication beam, wherein the best communication beam refers to one of a plurality of quasi-communication beams generated by a multi-array antenna and is used for communicating with the first satellite at a given time, centers of the quasi-communication beams are arranged regularly, and coverage areas of any two adjacent quasi-communication beams partially overlap, the satellite tracking method being **characterized in** comprising:
recording the best communication beam used when the ground equipment initiates communication with the first satellite (S200);
recording an initial orientation angle value indicating a direction toward which a reference object fixed relative to the multi-array antenna is toward when the ground equipment initiates communication with the first satellite (S202);
selecting a plurality of candidate beams, each corresponding to one of the quasi-communication beams adjacent to the best communication beam (S400, S402);
determining whether to replace the best communication beam with a selected one of the candidate beams based on a first signal strength of the selected candidate beam (S404), wherein the quasi-communication beams that are not among the candidate beams are excluded from the determination, the determining comprising:
performing a scanning operation for each of the candidate beams (S50), wherein the scanning operation comprises:
determining whether a first signal strength is greater than a second signal strength, wherein the first signal strength is a signal strength of the candidate beam measured when the candidate beam communicates with the first satellite, and the second signal strength is a signal strength of the best communication beam measured when the best communication beam communicates with the first satellite (S504); and
when the first signal strength is greater than the second signal strength, including the candidate beam in a replacement beam group (S506);
when the replacement beam group includes at least one candidate beam, selecting one of the at least one candidate beams included in the replacement beam group to replace the best communication beam, wherein the signal strength of the selected candidate beam is greater than the signal strength of any unselected candidate beam (S510, S514);
obtaining a switched orientation angle value representing toward direction of the reference object at a time when the ground equipment is prepared to replace the first satellite with a second satellite (S210, S220, S222, S230); and
selecting one of the quasi-communication beams as the best communication beam used when the ground equipment initiates communication with the second satellite, according to an angular change between the initial orientation angle value and the switched orientation angle value and the best communication beam used when the ground equipment initiates communication with the first satellite (S240).

2. The satellite tracking method for ground equipment as set forth in claim 1, wherein the selecting the plurality of candidate beams comprises:
selecting all communication beams adjacent to the best communication beam as the candidate beams, in response to communicating with the first satellite and without having replaced the best communication beam yet (S402); and
setting the most recently replaced best communication beam as a previous communication beam and determining the candidate beams to be selected according to a positional relationship between the best communication beam and the previous communication beam, in response to communicating with the first satellite and having replaced the best communication beam (S602).

3. The satellite tracking method for ground equipment as set forth in claim 2, wherein the setting the most recently replaced best communication beam as the previous communication beam and determining the candidate beams to be selected according to the positional relationship between the best communication beam and the previous communication beam, in response to communicating with the first satellite and having replaced the best communication beam, comprises:
selecting a central beam, wherein a relative direction between the central beam and the best communication beam is equal to a relative direction between the best communication beam and the previous communication beam (S800, S802);
selecting at least one offset beam, wherein each of the at least one offset beam is adjacent to the central beam, and each of the at least one offset beam is also adjacent to the best communication beam (S804); and
using the selected central beam and the at least one offset beam as the candidate beams to be selected (S806).

4. The satellite tracking method for ground equipment as set forth in claim 1, wherein the centers of three adjacent ones among the quasi-communication beams enclose an equilateral triangle.

5. The satellite tracking method for ground equipment as set forth in claim 1, further comprising:
selecting a plurality of directions (S1000);
assigning a corresponding and distinct first designation to each of the directions, thereby obtaining a plurality of the first designations (S1002); and
performing a setting procedure for each of the quasi-communication beams (S1004), wherein the setting procedure comprises:
setting the quasi-communication beam undergoing the setting procedure as a setting-in-progress beam, and assigning a second designation, which is distinct from those assigned to other quasi-communication beams, to the setting-in-progress beam;
and
labeling the quasi-communication beams adjacent to the setting-in-progress beam using the second designation and the first designations.

6. The satellite tracking method for ground equipment as set forth in claim 5, wherein the selecting the plurality of candidate beams comprises:
selecting all communication beams labeled by the second designation corresponding to the best communication beam and any of the first designations as the candidate beams, in response to communicating with the first satellite and without having replaced the best communication beam yet; and
setting the most recently replaced best communication beam as a previous communication beam and determining the candidate beams to be selected according to a positional relationship between the best communication beam and the previous communication beam, in response to communicating with the first satellite and having replaced the best communication beam.

7. The satellite tracking method for ground equipment as set forth in claim 6, wherein the setting the most recently replaced best communication beam as the previous communication beam and determining the candidate beams to be selected according to the positional relationship between the best communication beam and the previous communication beam, in response to communicating with the first satellite and having replaced the best communication beam, comprises:
selecting a central beam, wherein when the best communication beam is labeled by the second designation corresponding to the previous communication beam and a direction designation among the first designations, the central beam is the quasi-communication beam labeled by the second designation corresponding to the best communication beam and the direction designation;
selecting at least one offset beam, wherein each of the at least one offset beam is adjacent to the central beam, and each of the at least one offset beam is also adjacent to the best communication beam; and
using the selected central beam and the at least one offset beam as the candidate beams to be selected.

8. The satellite tracking method for ground equipment as set forth in claim 6, wherein the performing the scanning operation for each of the candidate beams further comprises:
stopping the scanning operation for the candidate beams when the first signal strength of the candidate beam undergoing the scanning operation is greater than the second signal strength and reaches a preset threshold.

9. A satellite tracking method suitable for use in a ground equipment communicating with a first satellite and a second satellite, wherein the ground equipment communicates with the first satellite and the second satellite using a best communication beam among a plurality of quasi-communication beams generated by a multi-array antenna, the first satellite and the second satellite are on the same orbit, and the second satellite initiates communication with the ground equipment immediately after the first satellite, the satellite tracking method being **characterized in** comprising:
recording the best communication beam used when the ground equipment initiates communication with the first satellite, and recording an initial orientation angle value indicating a direction pointed by a reference object on a horizontal plane, which is relatively fixed with respect to the multi-array antenna, at that time (S200, S202);
obtaining a switched orientation angle value indicating a direction pointed by the reference object on the horizontal plane at that time when the ground equipment is prepared to replace the first satellite with the second satellite (S210 - S230); and
selecting one of the quasi-communication beams as the best communication beam used when the ground equipment initiates communication with the second satellite, according to an angular change between the initial orientation angle value and the switched orientation angle value and the best communication beam used when the ground equipment initiates communication with the first satellite (S240).

10. A ground equipment (10), **characterized in** comprising:
a processor (100) for executing the satellite tracking method as set forth in any one of claims 1 to 9;
an antenna signal converter (110) electrically coupled to the processor (100);
an electronic compass (115) electrically coupled to the processor (100); and
a multi-array antenna (130) electrically coupled to the antenna signal converter (110).
